# EUROPEAN PATENT APPLICATION

(11) **EP 4 763 576 A1**
(43) Date of publication of application: **24.06.2026**
(21) Application number: 24220717.3
(22) Date of filing: 17.12.2024
(51) Int. Cl.: B60L 3/00, B60L 3/04, B60L 50/51, H02H 3/02, H02H 7/08, H02H 7/09, H02P 29/024

(54) **MOTOR DRIVE SYSTEM AND METHOD FOR PROVIDING POWER TO AUXILIARY LOADS ONBOARD AN E-VEHICLE WHEN UNDER FAULT**

(71) Applicant: VOLVO TRUCK CORPORATION, 405 08 Göteborg (SE)
(72) Inventor: Jägerhag, Charlie, 417 23 GÖTEBORG (SE); Hall, Sebastian, 413 17 GÖTEBORG (SE); Gillström, Andreas, 421 34 VÄSTRA FRÖLUNDA (SE)
(74) Representative: Lavoix

(57) **Abstract**

Motor drive system (1) for providing power to auxiliary loads of a vehicle at least partially electrically powered, comprising:
- an electric machine (2);
- an AC/DC inverter (3) having its AC and DC sides (5,6) connected to the electric machine and a high voltage power system (100) of the vehicle, respectively and when the vehicle undergoes a fault causing onboard high voltage batteries to be disconnected, the inverter assumes a first configuration or a second configuration;
- a controller (4) switching the inverter between the two configurations based on a comparison of a reference voltage with the DC voltage measured at the DC output of the inverter, thereby controlling an output voltage supplying the auxiliary loads.

## Description

### TECHNICAL FIELD

The disclosure relates generally to vehicles which are at least partially supplied with electrical power, hence be them fully electric vehicles or hybrid vehicles. In particular aspects, the disclosure relates to a motor drive system and a method configured for providing power to auxiliary loads onboard such a vehicle experiencing an electrical fault, for example while travelling. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In a fault situation in an at least partially electrically powered vehicle, when the high voltage batteries are disconnected, the power supply to all high voltage components is cutoff. The loss of power supplies for the electrified auxiliary loads, such as air compressors, steering servos or DC/DC converters, can lead to undesired operational situations.

To mitigate such issue, known solutions foresee the introduction of redundant power supplies for at least all important components. However, this solution introduces significant additional costs and increases the complexity of the whole power system.

### SUMMARY

According to a first aspect of the disclosure, there is provided a motor drive system for providing power to one or more auxiliary loads onboard of an at least partially electrically powered vehicle, the motor drive system comprising, suitable to be mounted onboard of the vehicle, at least:
- an electric machine;
- an AC/DC inverter having its AC side connected to the electric machine and its DC side connected to a high voltage power system of the vehicle, wherein, when the vehicle undergoes an electric fault causing one or more onboard high voltage batteries of the vehicle to be disconnected, the AC/DC inverter is configured to assume a first configuration or alternatively a second configuration; and
- a controller configured to switch the AC/DC inverter between the first configuration and the second configuration based on a comparison of a predetermined reference voltage with the DC voltage measured at the DC output of the inverter, thereby controlling the output voltage suitable for supplying at least one of the one or more auxiliary loads.

The first aspect of the disclosure may seek to prevent or at least mitigate undesired operative situations where, while the vehicle is travelling, the high voltage batteries of the vehicle are disconnected due to a fault and power supplies for onboard electrified auxiliary loads may be lost. A technical benefit may include delivering a voltage level for powering at least some, if not all, onboard auxiliary loads, also under the above mentioned electrical faulty condition.

Optionally in some examples, including in at least one preferred example, when the vehicle undergoes said electric fault causing one or more onboard high voltage batteries of the vehicle to be disconnected, the AC/DC inverter is configured to assume said first configuration where the electric machine is short circuited by the AC/DC inverter and the voltage output on the DC side of the AC/DC inverter is substantially equal to zero, or alternatively said second configuration where the AC/DC inverter operates as a full bridge rectifier and the voltage output on the DC side of the AC/DC inverter is substantially equal to the induced voltage of the actual rectified back electromotive force of the electric machine. A technical benefit may include assuming safe configurations while delivering a voltage level for powering at least some, if not all, onboard auxiliary loads, also under the above mentioned electrical faulty condition.

Optionally in some examples, including in at least one preferred example, the controller switches the AC/DC inverter in the first configuration when the output measured DC voltage is equal or higher than the reference voltage, and switches the AC/DC inverter in the second configuration when the output measured DC voltage is lower than the reference voltage. A technical benefit may include supplying with electrical power at least some, if not all, onboard auxiliary loads, according to an efficient and effective solution, also under such operative circumstances.

Optionally in some examples, including in at least one preferred example, the controller is configured to run a hysteresis control at a predetermined frequency, wherein when during said hysteresis control the output measured DC voltage is equal or higher than the reference voltage, then the AC/DC inverter is switched into or kept in the first configuration, and when the output measured DC voltage is lower than the reference, the AC/DC inverter is switched into or kept in the second configuration. A technical benefit may include supplying with electrical power at least some, if not all, onboard auxiliary loads, according to a quite simple and yet effective solution, also under such operative circumstances.

Optionally in some examples, including in at least one preferred example, the controller is a proportional gain controller and is configured to control the duty cycle between the first and second configurations. A technical benefit may include supplying with electrical power at least some, if not all, onboard auxiliary loads according to a simple and effective solution, also under such operative circumstances.

Optionally in some examples, including in at least one preferred example, the controller is configured to boost or cause boosting the DC voltage to be output at the output of the AC/DC inverter at a level equal to or above the induced voltage value of the back electromotive force. A technical benefit may include supplying with electrical power at least some, if not all, onboard auxiliary loads in a more effective way, also under such operative circumstances and according to a quite simple and effective solution.

Optionally in some examples, including in at least one preferred example, the electric machine comprises or is constituted by an onboard permanent magnet synchronous machine. Optionally in some examples, including in at least one preferred example, the electric machine comprises or is constituted by an onboard electrical excited synchronous machine. A technical benefit may include using a permanent magnet synchronous machine or an electrical excited synchronous already used onboard of a vehicle for other functionalities, thus resulting in a compact, non-redundant and cost-efficient solution. The possibility of using alternatively a permanent magnet synchronous machine or an electrical excited synchronous machine, may allow achieving a greater flexibility of the system.

Optionally in some examples, including in at least one preferred example, the electric machine comprises or is constituted by a multi-phase onboard three-phase inverter.

A technical benefit may include using a multi-phase inverter already used onboard of a vehicle for other functionalities, e.g. a three-phase inverter, thus resulting in a compact, non-redundant and cost-efficient solution.

According to a second aspect of the disclosure, there is provided a full or hybrid vehicle comprising the motor drive system as defined in one or more of the relevant appended claims. Technical benefit(s) may include what above indicated. In particular, the vehicle can be any type of fully electric or hybrid vehicle, such as trucks, heavy duty vehicles, etc.

According to a third aspect of the disclosure, there is provided a method for providing power to one or more auxiliary loads onboard of an at least partially electrically powered vehicle, the method comprising, in whichever suitable order:
- providing onboard the vehicle an electric machine and an AC/DC inverter;
- connecting the AC side of the AC/DC inverter to the electric machine and the DC side of the AC/DC inverter to a high voltage power system of the vehicle, wherein, when the vehicle undergoes an electric fault causing one or more onboard high voltage batteries of the vehicle to be disconnected, the AC/DC inverter assumes either a first configuration or alternatively a second configuration;
- switching, via an onboard controller, the AC/DC inverter between the first configuration and the second configuration based on a comparison of a reference voltage with the DC voltage measured at the DC output of the AC/DC inverter, thereby controlling an output voltage suitable for supplying at least one of the one or more auxiliary loads.

The third aspect of the disclosure may seek to prevent or at least mitigate undesired operative situations where, while the vehicle is travelling, the high voltage batteries of the vehicle are disconnected due to a fault and power supplies for onboard electrified auxiliary loads may be lost. A technical benefit may include delivering a voltage level for powering at least some, if not all, onboard auxiliary loads, also under the above mentioned electrical faulty condition.

Optionally in some examples, including in at least one preferred example, wherein when the vehicle undergoes said electric fault causing one or more onboard high voltage batteries of the vehicle to be disconnected, the AC/DC inverter assumes said first configuration where the electric machine is short circuited by the AC/DC inverter and the voltage output on the DC side of the AC/DC inverter is substantially equal to zero, or alternatively said second configuration where the AC/DC inverter operates as a full bridge rectifier and the voltage output on the DC side of the AC/DC inverter is substantially equal to the induced voltage of the actual rectified back electromotive force of the electric machine. A technical benefit may include assuming safe configurations while delivering a voltage level for powering at least some, if not all, onboard auxiliary loads, also under the above mentioned electrical faulty condition.

Optionally in some examples, including in at least one preferred example, the step of switching comprises switching the AC/DC inverter in the first configuration when the output measured DC voltage is equal or higher than the reference voltage, and switching the AC/DC inverter in the second configuration when the output measured DC voltage is lower than the reference voltage. A technical benefit may include supplying with electrical power at least some, if not all, onboard auxiliary loads, according to an efficient and effective solution, also under such operative circumstances.

Optionally in some examples, including in at least one preferred example, the step of switching comprises running a hysteresis control at a predetermined frequency, and wherein when the output measured DC voltage is equal or higher than the reference voltage, then the AC/DC inverter is switched in the first configuration, and when the output measured DC voltage is lower than the reference voltage, the AC/DC inverter is switched in the second configuration. A technical benefit may include supplying with electrical power at least some, if not all, onboard auxiliary loads, according to a quite simple and yet effective solution, also under such operative circumstances.

Optionally in some examples, including in at least one preferred example, the controller is a proportional gain controller and the step of switching comprises controlling the duty cycle between the first and second configurations.

Optionally in some examples, including in at least one preferred example, the step of switching comprises boosting or causing boosting the DC voltage to be output at the output of the AC/DC inverter at a level equal to or above the induced voltage value of the back electromotive force. A technical benefit may include supplying with electrical power at least some, if not all, onboard auxiliary loads in a more effective way, also under such operative circumstances and according to a quite simple and effective solution.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a block diagram schematically representing an exemplary motor drive system for providing power to one or more auxiliary loads onboard of an at least partially electrically powered vehicle, according to the present disclosure.
**FIG. 2** schematically shows a representation of a switching vector of an AC/DC inverter usable in a motor drive system according to the present disclosure.
**FIG. 3** schematically illustrates an exemplary simulation of the pattern of DC voltage and DC current obtainable by using the motor drive system according to the present disclosure.
**FIG. 4** illustrates a flow diagram schematically representing an exemplary method for providing power to one or more auxiliary loads onboard of an at least partially electrically powered vehicle, according to the present disclosure.

### DETAILED DESCRIPTION

The detailed description set forth below provides information and examples of the disclosed technology with sufficient detail to enable those skilled in the art to practice the disclosure.

As previously mentioned, while travelling, vehicles which are at least partially electrically powered may undergo severe faults that may cause the onboard batter(y)/ies to be disconnected, thus cutting off all high voltage components and the loss of power supplies for the onboard electrified auxiliary loads. The motor drive system and method according to the present disclosure allow delivering a needed DC voltage level also in such faulty conditions, thereby allowing to power supply at least part of the onboard auxiliary loads, even when the vehicle is travelling.

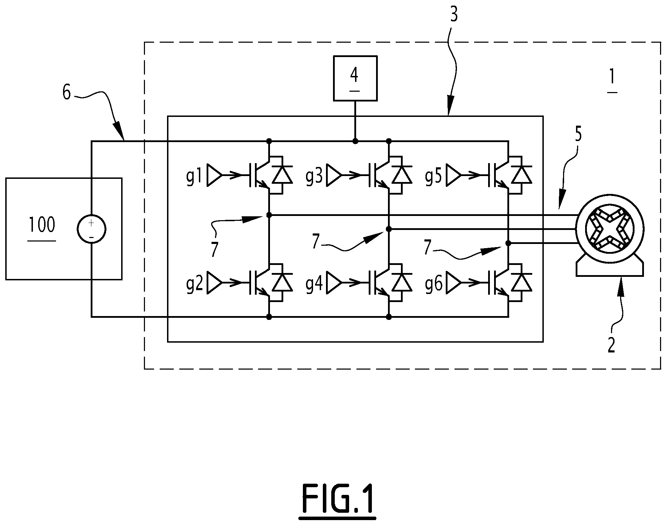

FIG. 1 is a block diagram schematically representing an exemplary motor drive system according to the present disclosure, indicated by the overall reference number 1, which is configured for providing power to one or more auxiliary loads onboard of a vehicle which is supplied at least partially with electric powered.

The one or more onboard auxiliary loads may comprise, according to known solutions, air compressors, DC/DC converters, etc.

The vehicle can be a full or hybrid electric vehicle of any suitable type and, according to solutions well known in the art or in any case readily available to those skilled in the art, comprises a high voltage system, schematically represented in FIG. 1 by the reference number 100 that includes one or more high voltage batteries.

As illustrated, the motor drive system 1 comprises, suitable to be mounted onboard of the vehicle, at least an electric machine 2, an AC/DC inverter 3, and a controller 4.

The AC/DC inverter 3 has its AC side, indicated in FIG. 1 by the reference number 5, which is connected to the electric machine 2, and its DC side, indicated in FIG. 1 by the reference number 6, which is connected to the high voltage power system 100 of the vehicle.

When the vehicle undergoes, for example while travelling, an electric fault causing the one or more onboard high voltage batteries of the vehicle to be disconnected, the AC/DC inverter 3 assumes either a first configuration, in particular a safe configuration or alternatively a second configuration, in particular a second safe configuration.

In particular, when the vehicle undergoes, for example while travelling, said electric fault which causes the one or more onboard high voltage batteries of the vehicle to be disconnected, the AC/DC inverter 3 assumes either:
- a first configuration, namely an Active Short Circuit (ASC) safe configuration, where the electric machine 2 is short circuited by the AC/DC inverter 3 and the voltage output on the DC side 6 of the AC/DC inverter 3 is substantially equal to zero; or alternatively
- a second configuration, namely a Safe Pulse Open (SPO) safe configuration, where the AC/DC inverter 3 operates as a full bridge rectifier, in particular and the voltage output on the DC side 6 of the AC/DC inverter 3 is substantially equal to the induced voltage of the actual rectified back electromotive force of the electric machine 2.

Conveniently, the controller 4 is configured to switch the AC/DC inverter 3 between the first configuration and the second configuration based on a comparison of a reference voltage with the DC voltage measured at the DC output of the AC/DC inverter 3, thereby controlling an output voltage suitable for supplying the one or more auxiliary loads.

In one possible example, the controller switches the AC/DC inverter in the first configuration when the output measured DC voltage is equal or higher than the reference voltage, and switches the AC/DC inverter in the second configuration when the output measured DC voltage is lower than the reference voltage.

In one possible example, the output voltage for supplying the one or more auxiliary loads may range from zero to the induced voltage value of the back electromotive force.

In one possible example, the output voltage for supplying the one or more auxiliary loads may be even higher than the induced voltage value of the back electromotive force.

In one possible example, the controller 4 is configured to carry out a hysteresis-based control, that is run at a suitable and predetermined frequency, e.g. 8kHz.

Accordingly, when during the hysteresis control the output measured DC voltage is equal or higher than the reference voltage, then the AC/DC inverter 3 is switched into or kept in the first configuration (ASC), and when the output measured DC voltage is lower than the reference voltage, the AC/DC inverter 3 is switched into or kept in the second configuration (SPO).

In a further possible example, the controller 4 is a proportional gain controller and is configured to control the duty cycle between the first and second configurations.

In one possible example, the controller 4 is configured to boost or cause boosting the DC voltage to be output at the output of the AC/DC inverter 3 at a level equal to or above the induced voltage value of the back electromotive force.

For instance, the one or more auxiliary loads may be organized in groups with a different priority depending on their importance, and the controller 4 may boost or cause boosting the DC voltage when the power to be provided to the one or more auxiliary loads is low enough, i.e. it is below a power threshold that may not be sufficient for powering for example the auxiliary load(s) ranked with the highest priority.

The controller 4 can be constituted by or comprised in the electronic control unit (ECU) of the vehicle itself, or can be a separate electronic controller specifically devised for the functionalities of the system 1 according to the present disclosure.

The controller 4 is adapted for example to execute instructions from a computer-readable medium to perform any of the functions or processing described herein. While the controller 4 is represented in FIG. 1 by a single box, it may include any collection of devices that individually or jointly execute a set (or multiple sets) of instructions to perform any of the functions or processing discussed herein. Accordingly, any reference in the disclosure and/or claims to a controller includes reference to one or more such devices to individually or jointly execute a set (or multiple sets) of instructions to perform such functions or processing.

In particular, the controller 4 may comprise at least one computing device or electronic device capable of including firmware, hardware, and/or executing software instructions to implement the functionality/processing described herein. The controller 4 may include processing circuitry (e.g., processing circuitry including one or more processor devices or control units), a memory, such as the data storage. The processing circuitry may include any number of hardware components for conducting data or signal processing or for executing computer code stored in a memory. The processing circuitry may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry may further include computer executable code that controls operation of the programmable device.

In one possible aspect, the electric machine 2 is an onboard electric machine, i.e. a machine already installed onboard of the vehicle already used also for purposes other than the functionalities devised for it within the context of the motor drive system 1 according to the present disclosure.

In one possible aspect, the electric machine 2 is a three-phase electric machine, and in particular it comprises or is constituted by a permanent magnet synchronous machine.

In one possible aspect, the electric machine 2 comprises or is constituted by an onboard electrical excited synchronous machine.

In one possible aspect, the AC/DC inverter 3 is an onboard multi phase inverter, i.e. an inverter already installed onboard of the vehicle already used also for purposes other than the functionalities devised for it within the context of the motor drive system 1 according to the present disclosure.

In one possible aspect, the AC/DC inverter 3 is an onboard three-phase inverter.

In one possible aspect, as schematically illustrated in figure 1, the AC/DC inverter 3 comprises or consists of three parallel legs of half bridges, with the midpoints 7, referred to as the AC side, which are connected each to a corresponding phase of the electric machine 2.

As illustrated in the aspect of FIG. 1, the AC/DC inverter 3 comprises six switches indicated by the alfa-numerical references, g1, g2, g3, g4, g5, g6.

Under normal operating conditions, the six switches are turned on and off in a way such that the AC voltages to the electric machine 2 are properly controlled.

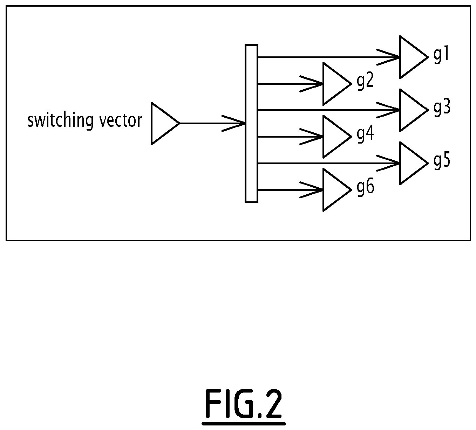

The switching signals can be represented by a switching vector (schematically represented in FIG. 2) with six values representing the state, on[1] or off[0], of each of the switches. The order is for example hereby defined as follows: [leg 1 top, leg 1 bottom, leg2 top, leg 2 bottom, leg 3 top, leg 3 bottom].

When an electric fault, in particular a severe electric fault, occurs, as above indicated the AC/DC inverter 3 goes to one of two possible safe states or configurations, namely:
- the Active Short Circuit (ASC) status, which means short-circuiting the electric machine 2 through the inverter 3 by setting the switching vector to [1,0, 1,0, 1,0] or [0,1,0,1,0,1] depending on whether it is desired to short-circuit through the top or bottom switches. In the ASC status, the voltage out from the inverter on the DC side 6 is zero;
- the Safe Pulse Open (SPO) status, which means leaving all the switches g1 to g6 open by setting the switching vector to [0,0,0,0,0,0]. In this mode, the AC/DC inverter 3 is a three-phase full bridge rectifier because of the anti-parallel diodes in half bridges. In the SPO status, the voltage out from the inverter on the DC side 6 is the rectified voltage of the back-emf of the electric machine 2. The back-emf of the machine is proportional to the speed.

By switching under the control of the controller 4 between the ASC and the SPO configurations with a predefined time interval, the voltage on the DC side can be properly controlled, for example within the range above indicated.

The gains of the controller 4 may be suitably calibrated for example during a testing phase.

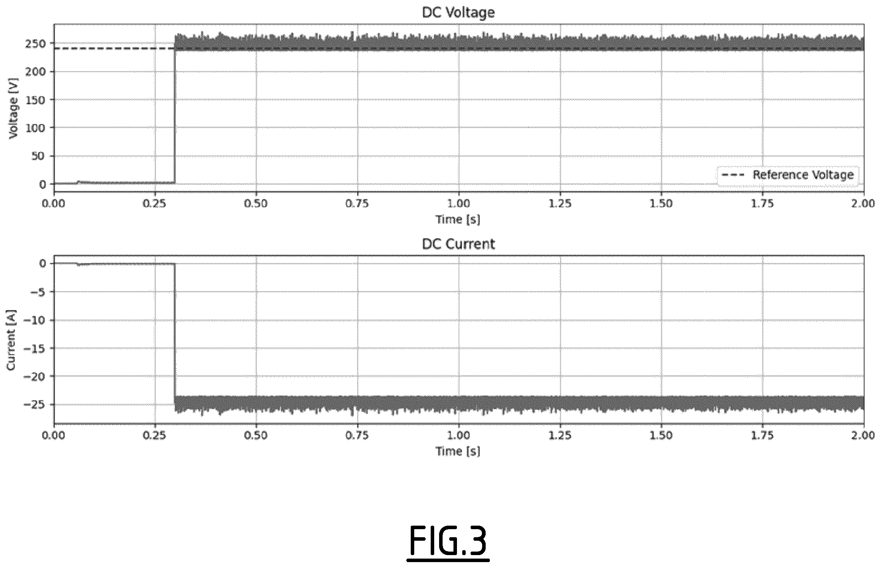

FIG. 3 shows the simulated pattern of current and voltage obtainable in an exemplary simulation using the motor drive system 1 according to the present disclosure.

According to this exemplary simulation, the electric machine is spinning at 3000 rpm and the reference voltage is 240V. In the exemplary simulation, a simple resistive load is used as representative of the one or more onboard auxiliary loads.

In a fault situation, the momentum of the vehicle keeps the electric machine 2 spinning until the vehicle comes to a full stop. If the machine is spinning sufficiently fast, the system 1 is able to deliver a requested DC voltage level between zero and the induced voltage of the electromagnetic force. The required speed for a specific voltage level depends on the induced-voltage characteristics of the electromagnetic force, the impedance of the load and the requested load power.

In the example of Figure 3, a power of 6 kW can be sustained down to 400 rpm.

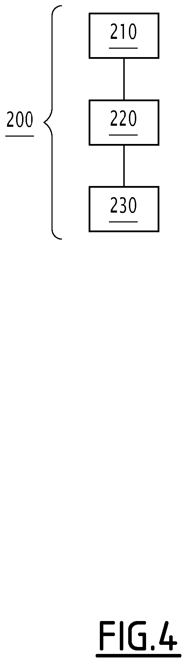

FIG. 4 is a flow diagram schematically representing an exemplary method for providing power to one or more auxiliary loads onboard of an at least partially electrically powered vehicle, therein indicated by the overall reference number 200.

According to an aspect, the method 200 comprises at least the following steps, which can be executed in whichever suitable order:
- 210: providing onboard the vehicle an electric machine 2 and an AC/DC inverter 3 having an AC side 5 and a DC side 6;
- 220: connecting the AC side 5 of the AC/DC inverter 3 to the electric machine 2 and the DC side 6 of the AC/DC inverter 3 to a high voltage power system 100 of the vehicle, wherein, when the vehicle undergoes, for example while travelling, an electric fault causing one or more onboard high voltage batteries of the vehicle to be disconnected, the AC/DC inverter 3 is configured to assume either a first configuration, in particular a first safe configuration, or alternatively a second safe configuration, in particular a second safe configuration.
- 230: switching, via an onboard controller, such as the onboard controller 4, the AC/DC inverter 3 between the first configuration and the second configuration based on a comparison of a reference voltage with the DC voltage measured at the DC output of the AC/DC inverter 3, thereby controlling an output voltage suitable for supplying at least one of the one or more auxiliary loads.

According to some examples, when the vehicle undergoes, for example while travelling, an electric fault causing one or more onboard high voltage batteries of the vehicle to be disconnected, the AC/DC inverter 3 assumes said first configuration where the electric machine 2 is short circuited by the AC/DC inverter 3 and the voltage output on the DC side 6 of the AC/DC inverter 3 is substantially equal to zero, or alternatively said second configuration where the AC/DC inverter 3 operates as a full bridge rectifier and the voltage output on the DC side 6 of the AC/DC inverter 3 is substantially equal to the induced voltage of the actual rectified back electromotive force of the electric machine 2;
According to some examples, the AC/DC inverter 3 is a multiphase inverter, e.g. a three-phase inverter.

According to some examples, the electric machine 2 comprises or is constituted by a permanent magnet synchronous machine or by an electrical excited synchronous machine.

In particular, the AC/DC inverter 3, and the permanent magnet synchronous machine or the electrical excited synchronous machine may be devices already installed onboard of the vehicle and used also for other purposes.

According to a possible example, the switching step 230 comprises switching, for instance via the controller 4, the AC/DC inverter 3 in the first configuration when the output measured DC voltage is equal or higher than the reference voltage, and switching the AC/DC inverter 3 in the second configuration when the output measured DC voltage is lower than the reference voltage.

According to a possible example, the switching step 230 comprises running, for instance via the controller 4, a hysteresis control at a predetermined frequency, e.g. 8kHz, and wherein when the output measured DC voltage is equal or higher than the reference voltage, then the AC/DC inverter 3 is switched in the first configuration, and when the output measured DC voltage is lower than the reference voltage, the AC/DC inverter 3 is switched in the second configuration.

According to a possible example, the switching step 230 comprises controlling the duty cycle between the first and second configurations by means of a proportional gain controller.

According to a possible example, the switching step 230 comprises boosting or causing boosting, for instance via the controller 4, the DC voltage to be output at the output of the AC/DC inverter 3 at a level equal to or above the induced voltage value of the back electromotive force.

The operational actions/functionalities described in any of the exemplary aspects herein are described to provide examples and discussion. The actions/functionalities may be performed by hardware components, may be embodied in machine-executable instructions to cause a processor to perform the actions, or may be performed by a combination of hardware and software. Although a specific order of method actions may have been shown or described, the order of the actions may differ. In addition, two or more actions may be performed concurrently or with partial concurrence.

The present disclosure provides the following examples.

Example 1: A motor drive system 1 for providing power to one or more auxiliary loads onboard of an electrically powered vehicle, the motor drive system comprising at least, suitable to be mounted onboard of the vehicle:
- an electric machine 2;
- an AC/DC inverter 3 having its AC side 5 connected to the electric machine 2 and its DC side 6 connected to a high voltage power system 100 of the vehicle, wherein, when the vehicle undergoes, for example while travelling, an electric fault causing one or more onboard high voltage batteries of the vehicle to be disconnected, the AC/DC inverter 3 assumes either a first configuration or alternatively a second configuration
- a controller 4 that switches the AC/DC inverter 3 between the first configuration and the second configuration based on a comparison of a reference voltage with the DC voltage measured at the DC output of the AC/DC inverter 3, thereby controlling an output voltage suitable for supplying at least one of the one or more auxiliary loads.

Example 2: The motor drive system of example 1, when the vehicle undergoes said electric fault causing one or more onboard high voltage batteries of the vehicle to be disconnected, the AC/DC inverter 3 assumes said first configuration where the electric machine 2 is short circuited by the AC/DC inverter 3 and the voltage output on the DC side 6 of the AC/DC inverter 3 is substantially equal to zero, or alternatively said second configuration where the AC/DC inverter 3 operates as a full bridge rectifier and the voltage output on the DC side 6 of the AC/DC inverter 3 is substantially equal to the induced voltage of the actual rectified back electromotive force of the electric machine 2.

Example 3: The motor drive system of any of examples 1-2, wherein the controller 4 switches the AC/DC inverter 3 in the first configuration when the output measured DC voltage is equal or higher than the reference voltage, and switches the AC/DC inverter 3 in the second configuration when the output measured DC voltage is lower than the reference voltage.

Example 4: The motor drive system of any of examples 1-3, wherein the controller 4 runs a hysteresis control at a predetermined frequency, and wherein when during said control the output measured DC voltage is equal or higher than the reference voltage, then the AC/DC inverter 3 is switched n the first configuration, and when the output measured DC voltage is lower than the reference voltage, the AC/DC inverter 3 is switched in the second configuration.

Example 5: The motor drives system of any of examples 1-3, wherein the controller 4 is a proportional gain controller and controls the duty cycle between the first and second configurations.

Example 6: The motor drive system of any of examples 1-5, wherein the controller 4 boosts or causes boosting the DC voltage to be output at the output of the AC/DC inverter 3 at a level equal to or above the induced voltage value of the back electromotive force.

Example 7: The motor drive system of any of examples 1-6, wherein the electric machine 2 comprises or is constituted by an onboard permanent magnet synchronous machine.

Example 8: The motor drive system of any of examples 1-7, wherein the electric machine 2 comprises or is constituted by an onboard electrical excited synchronous machine.

Example 9: The motor drive system of any of examples 1-8, wherein the AC/DC inverter 3 comprises or is constituted by is an onboard multi-phase inverter.

Example 10: A full or hybrid electric vehicle comprising the motor drive system 1 of any one of the previous examples.

Example 11: A method 200 for providing power to one or more auxiliary loads onboard of an at least partially electrically powered vehicle, the method 200 comprising, in whichever suitable order:
- 210: providing onboard the vehicle an electric machine 2 and an AC/DC inverter 3;
- 220: connecting the AC side 5 of the AC/DC inverter 3 to the electric machine 2 and the DC side 6 of the AC/DC inverter 3 to a high voltage power system 100 of the vehicle, wherein, when the vehicle undergoes, for example while travelling, an electric fault causing one or more onboard high voltage batteries of the vehicle to be disconnected, the AC/DC inverter 3 assumes either a first configuration or alternatively a second configuration;
- 230: switching, via an onboard controller 4, the AC/DC inverter 3 between the first configuration and the second configuration based on a comparison of a reference voltage with the DC voltage measured at the DC output of the AC/DC inverter 3, thereby controlling an output voltage suitable for supplying at least one of the one or more auxiliary loads.

Example 12: The method 200 of example 10, wherein when the vehicle undergoes an electric fault causing one or more onboard high voltage batteries of the vehicle to be disconnected, the AC/DC inverter 3 assumes said first configuration where the electric machine 2 is short circuited by the AC/DC inverter 3 and the voltage output on the DC side 6 of the AC/DC inverter 3 is substantially equal to zero, or alternatively said second configuration where the AC/DC inverter 3 operates as a full bridge rectifier and the voltage output on the DC side 6 of the AC/DC inverter 3 is substantially equal to the induced voltage of the actual rectified back electromotive force of the electric machine 2.

Example 13: The method 200 of any of examples 11-12, wherein said switching 230 comprises switching the AC/DC inverter 3 in the first configuration when the output measured DC voltage is equal or higher than the reference voltage, and switching the AC/DC inverter 3 in the second configuration when the output measured DC voltage is lower than the reference voltage.

Example 14: The method 200 of any of examples 11-13, wherein said switching 230 comprises running a hysteresis control at a predetermined frequency, and wherein when the output measured DC voltage is equal or higher than the reference voltage, then the AC/DC inverter 3 is switched in the first configuration, and when the output measured DC voltage is lower than the reference voltage, the AC/DC inverter 3 is switched in the second configuration.

Example 15: The method 200 of any of examples 11-13, wherein the controller 4 is a proportional gain controller and said switching 230 comprises controlling the duty cycle between the first and second configurations.

Example 16: The method 200 of any of examples 11-15, wherein said switching (230) comprises boosting or causing boosting the DC voltage to be output at the output of the AC/DC inverter (3) at a level equal to or above the induced voltage value of the back electromotive force.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein. For example, when the term "adapted" or "arranged" or "configured" is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A motor drive system (1) for providing power to one or more auxiliary loads onboard of an at least partially electrically powered vehicle, the motor drive system comprising at least, suitable to be mounted onboard the vehicle:
- an electric machine (2);
- an AC/DC inverter (3) having its AC side (5) connected to the electric machine (2) and its DC side (6) connected to a high voltage power system (100) of the vehicle, wherein, when the vehicle undergoes an electric fault causing one or more onboard high voltage batteries of the vehicle to be disconnected, the AC/DC inverter (3) assumes either a first configuration or alternatively a second configuration; and
- a controller (4) that switches the AC/DC inverter (3) between the first configuration and the second configuration based on a comparison of a reference voltage with the DC voltage measured at the DC output of the AC/DC inverter (3), thereby controlling an output voltage suitable for supplying at least one of the one or more auxiliary loads.

2. The motor drive system (1) of claim 1, wherein when the vehicle undergoes said electric fault causing one or more onboard high voltage batteries of the vehicle to be disconnected, the AC/DC inverter (3) assumes said first configuration where the electric machine (2) is short circuited by the AC/DC inverter (3) and the voltage output on the DC side (6) of the AC/DC inverter (3) is substantially equal to zero, or alternatively said second configuration where the AC/DC inverter (3) operates as a full bridge rectifier and the voltage output on the DC side (6) of the AC/DC inverter (3) is substantially equal to the induced voltage of the actual rectified back electromotive force of the electric machine (2).

3. The motor drive system (1) of any of claims 1-2, wherein the controller (4) switches the AC/DC inverter (3) in the first configuration when the output measured DC voltage is equal or higher than the reference voltage, and switches the AC/DC inverter (3) in the second configuration when the output measured DC voltage is lower than the reference voltage.

4. The motor drive system (1) of any of claims 1-3, wherein the controller (4) runs a hysteresis control at a predetermined frequency, and wherein when the output measured DC voltage is equal or higher than the reference voltage, then the AC/DC inverter (3) is switched in the first configuration, and when the output measured DC voltage is lower than the reference voltage, the AC/DC inverter (3) is switched into or kept in the second configuration.

5. The motor drive system (1) of any of claims 1-3, wherein the controller (4) is a proportional gain controller and controls the duty cycle between the first and second configurations.

6. The motor drive system (1) of any of claims 1-5, wherein the controller (4) boosts or causes boosting the DC voltage to be output at the output of the AC/DC inverter (3) at a level equal to or above the induced voltage value of the back electromotive force.

7. The motor drive system (1) of any of claims 1-6, wherein the electric machine (2) comprises or is constituted by an onboard permanent magnet synchronous machine.

8. The motor drive system (1) of any of claims 1-6, wherein the electric machine (2) comprises or is constituted by an onboard electrical excited synchronous machine.

9. A full or hybrid electric vehicle comprising the motor drive system (1) of any one of the previous claims.

10. A method (200) for providing power to one or more auxiliary loads onboard of an at least partially electrically powered vehicle, the method (200) comprising, in whichever suitable order:
- providing (210) onboard the vehicle an electric machine (2) and an AC/DC inverter (3);
- connecting (220) the AC side (5) of the AC/DC inverter (3) to the electric machine (2) and the DC side (6) of the AC/DC inverter (3) to a high voltage power system (100) of the vehicle, wherein, when the vehicle undergoes an electric fault causing one or more onboard high voltage batteries of the vehicle to be disconnected, the AC/DC inverter (3) assumes either a first configuration or alternatively a second configuration;
- switching (230), via an onboard controller (4), the AC/DC inverter (3) between the first configuration and the second configuration based on a comparison of a reference voltage with the DC voltage measured at the DC output of the AC/DC inverter (3), thereby controlling an output voltage suitable for supplying at least one of the one or more auxiliary loads.

11. The method (200) of claim 10, wherein when the vehicle undergoes an electric fault causing one or more onboard high voltage batteries of the vehicle to be disconnected, the AC/DC inverter (3) assumes said first configuration where the electric machine (2) is short circuited by the AC/DC inverter (3) and the voltage output on the DC side (6) of the AC/DC inverter (3) is substantially equal to zero, or alternatively said second configuration where the AC/DC inverter (3) operates as a full bridge rectifier and the voltage output on the DC side (6) of the AC/DC inverter (3) is substantially equal to the induced voltage of the actual rectified back electromotive force of the electric machine (2).

12. The method (200) of any of claims 10-11, wherein said switching (230) comprises switching the AC/DC inverter (3) in the first configuration when the output measured DC voltage is equal or higher than the reference voltage, and switching the AC/DC inverter (3) in the second configuration when the output measured DC voltage is lower than the reference voltage.

13. The method (200) of any of claims 10-12, wherein said switching (230) comprises running a hysteresis control at a predetermined frequency, and wherein when the output measured DC voltage is equal or higher than the reference voltage, then the AC/DC inverter (3) is switched in the first configuration, and when the output measured DC voltage is lower than the reference voltage, the AC/DC inverter (3) is switched in the second configuration.

14. The method (200) of any of claims 10-12, wherein the controller (4) is a proportional gain controller and said switching (230) comprises controlling the duty cycle between the first and second configurations.

15. The method (200) of any of claims 10-14, wherein said switching (230) comprises boosting or causing boosting the DC voltage to be output at the output of the AC/DC inverter (3) at a level equal to or above the induced voltage value of the back electromotive force.
